# EUROPEAN PATENT APPLICATION

(11) **EP 4 822 334 A1**
(43) Date of publication of application: **14.10.2026**
(21) Application number: 26171774.8
(22) Date of filing: 10.04.2026
(51) Int. Cl.: G01N 15/1404, G01N 15/14, G01N 15/149, G01N 15/1409, G01N 15/10

(54) **FLOW CYTOMETER, METHOD FOR USING A FLOW CYTOMETER AND A LABORATORY APPARATUS COMPRISING A FLOW CYTOMETER**

(30) Priority: 10.04.2025 US 202563768415 P
(71) Applicant: Hombrechtikon Systems Engineering AG, 8634 Hombrechtikon (CH)
(72) Inventor: Lutze, Konstantin, 8713 Uerikon (CH)
(74) Representative: IPS Irsch AG

(57) **Abstract**

A method for using a flow cytometer system (1), comprising the following steps:
- Providing a fluid handling device (2) with a mounting element for a pipette tip (3) and a capillary (4);
- Providing a flow cytometer (5) comprising a particle interrogation region (14) with a receiving section (7) for the capillary,
and a measuring device (11) for irradiating and analyzing a sample (17) in the capillary (4),
- Arranging the fluid handling device (2) fluid connected via the pipette tip (3) at a first end of a capillary (4);
- Directing the sample (17) through the capillary (4), wherein the capillary (4) is arranged at the receiving section (7) of the flow cytometer (5) and wherein the sample (17) is analyzed by the measuring device (11).

## Description

This invention relates to cytometers and methods for their operation. Cytometers are analytical instruments that detect and characterize cells or particles based on their optical, electrical, or mechanical properties. They are widely used in biomedical research, clinical diagnostics, and cell biology.

Modern cytometry encompasses various techniques for analyzing cells and particles in suspension. The most widely used method is flow cytometry. Flow cytometers are valuable laboratory instruments for the analysis and isolation of biological particles, such as cells and constituent molecules. Flow cytometers utilize a fluid stream to linearly segregate particles such that they can pass, single file, through a detection apparatus measuring properties such as light scattering and/or fluorescence. Individual cells can then be characterized according to the measured properties (light scattering, the presence of detectable markers, etc.). Thus, flow cytometers can be used, for example, to produce a profile (e.g., a diagnostic profile) of a population of biological particles. Some flow cytometers can be used to sort the biological particles based on their measured properties. In preferable embodiments individual cells pass through a laser beam in a hydrodynamically focused stream. Light scattering provides information about cell size and granularity, while fluorescence signals allow the identification of specific molecules. This technique is indispensable for immunophenotyping, as it enables the classification of immune cells based on surface markers. It also plays a crucial role in cancer diagnostics, particularly in the classification of leukemia subtypes. Furthermore, it is widely applied in cell biology for studying the cell cycle and apoptosis, offering valuable insights into cell proliferation and programmed cell death. In the state of the art, lasers are often used as a light source for scattering.

In the state of the art a primary light source such as LEDs can be for fluorescence analysis. The primary light source emits a primary radiation that stimulates fluorescence. This fluorescence is a secondary light source which emits a secondary radiation. This secondary radiation can then be detected by a detector, for example a photodiode or a PMT and further processed.

In addition to conventional flow cytometry, specialized techniques provide enhanced analytical capabilities. Imaging cytometry integrates microscopy with cytometric analysis, allowing not only the acquisition of numerical data but also the visualization of individual cells at high resolution. This technique is particularly valuable in cancer research, where it helps detect subtle morphological changes in tumor cells. Artificial intelligence further enhances this method by analyzing cellular images and classifying diseases with high accuracy. Another important approach is impedance cytometry, which measures the electrical properties of cells rather than relying on optical signals. Unlike traditional flow cytometry, this method does not require fluorescent labeling, making it faster and more cost-effective. It is widely used in blood analysis, where it enables the rapid differentiation and counting of blood cells, as seen in hematology analyzers. Additionally, it helps distinguish different cell types based on their unique electrical characteristics, making it a valuable tool for rapid point-of-care diagnostics.

For highly detailed single-cell analysis, mass cytometry (CyTOF) combines flow cytometry with mass spectrometry, replacing fluorescent markers with metal-based isotopes. This innovative approach eliminates fluorescence overlap issues and allows researchers to simultaneously measure over 40 biomarkers per cell, making it one of the most powerful tools in modern cytometry. Mass cytometry is particularly useful for immune profiling, as it enables the in-depth characterization of immune cell populations in diseases such as cancer and autoimmune disorders.

Moreover, it is revolutionizing cancer research by providing a deeper understanding of the tumor microenvironment and the interactions between cancer cells and immune cells.

Cytometry plays a crucial role in medical diagnostics, particularly in the detection and monitoring of diseases. In immunology, it is widely used to identify and classify immune cells such as T cells, B cells, and natural killer (NK) cells. By analyzing surface markers with fluorescently labeled antibodies, researchers and clinicians can assess immune system function and detect immune disorders. In hematology, cytometry is indispensable for diagnosing leukemia and lymphoma, as it helps distinguish between different types of blood cells and detect abnormal cell populations. By analyzing specific markers on blood cells, doctors can classify leukemia subtypes and determine the most effective treatment strategy.

Cytometry is also widely used in infectious disease monitoring, particularly in the management of HIV/AIDS. One of its most critical applications is CD4 T-cell counting, which helps evaluate the immune status of HIV patients and guide antiretroviral therapy decisions. By tracking CD4 levels over time, clinicians can assess disease progression and treatment effectiveness.

Beyond medical applications, cytometry is an essential tool in biotechnology and pharmaceutical research. In cell biology, it is used to analyze cell cycle progression and detect apoptosis. By staining DNA and proteins with fluorescent dyes, researchers can determine how cells transition through different phases of the cell cycle and identify apoptotic (dying) cells. These insights are crucial for understanding cell proliferation and programmed cell death in both healthy and diseased tissues.

In pharmaceutical research, cytometry plays a vital role in drug screening and toxicity testing. Scientists use cytometers to assess the effects of new compounds on cell viability, immune responses, and intracellular signaling pathways. This high-throughput analysis is essential for identifying promising drug candidates while eliminating toxic or ineffective substances early in the drug development process. In cancer research, cytometry is used to analyze tumor cells and identify biomarkers that indicate disease progression or treatment response. Researchers use these techniques to study tumor heterogeneity, detect circulating tumor cells in the bloodstream, and develop targeted therapies based on the molecular characteristics of cancer cells.

Beyond medicine and biotechnology, cytometry is increasingly applied in environmental and agricultural sciences. One important application is the analysis of microorganisms in water samples, where cytometers help detect and quantify bacteria, algae, and protozoa. This method provides a rapid and reliable way to monitor water quality, ensuring the safety of drinking water and detecting potential contamination in natural water sources.

In plant biology, cytometry is used to examine pollen viability, plant cell structures, and genetic characteristics. Researchers apply these techniques in breeding programs, genetic modification studies, and assessments of plant responses to environmental stress. Additionally, cytometry plays a key role in identifying genetically modified organisms (GMOs) by detecting specific DNA sequences or protein markers.

Although cytometry is a well-established method in research and diagnostics it still presents some practical challenges. One aspect that can limit its flexibility is the design of the capillaries in many instruments. Since these are permanently installed, replacing them requires considerable effort.

This can be an issue when analyzing cell solutions with varying densities. The flow properties of the medium affect hydrodynamic focusing, which is important for precise single-cell analysis. Since the capillaries cannot be adjusted to different fluids easily, sometimes they cannot be adjusted at all, this may impact measurement accuracy or reduce the efficiency of the system.

Additionally, when switching fluids, thorough cleaning of the capillaries is necessary to prevent deposits and contamination. This process takes time and requires the use of rinsing solutions. Despite cleaning, small residues may remain in the capillary, potentially affecting subsequent analyses.

Therefore, much time and effort go into maintaining the cytometer and preparing it for different probes and experiments.

Moreover, even modern cytometers are not fit to be included in a workflow, especially in an automated workflow. This means that there is always a system or workflow breach, whenever a cytometer is to be used.

This invention is directed to this problem.

It is therefore an object of this invention, to provide a method for processing a fluid, providing a more flexible and effective way of processing a fluid, especially in a cytometer.

The subject of the invention satisfying this object is characterized by the features of the independent claim.

The problems mentioned in the state of the art are overcome by the invention according to the method set out in claim 1.

The method comprises using a flow cytometer system, comprising the following steps:
Providing a fluid handling device with a mounting element for a pipette tip and a capillary.

Providing a flow cytometer comprising a particle interrogation region with a receiving section for the capillary as well as a measuring device for irradiating and analyzing a sample in the capillary.

Arranging the fluid handling device fluid connected via the pipette tip at a first end of a capillary and receiving the fluid sample into the capillary via the fluid handling device. Arranging the capillary at the receiving section of the flow cytometer Directing the sample through the capillary and analyzing the sample with the measuring device.

In a preferred embodiment, the method further comprises an automated laboratory apparatus with a treatment chamber in which the cytometer can be located.

The analysis-step can comprise counting and measuring cells. Thereby, the length and/or with of cells can be determined. A variety of sensors can be used to detect and/or count and/or measure the cells. It is also possible to use this sensor or these sensors to measure, count and/or detect other components of the sample such as molecules or particles.

This recognition and quantification of cells allows for collecting more precise data.

In a preferred embodiment of the method the cytometer comprises a fluorescence sensor and the cell suspension i.g. sample, is mixed with fluorescent dye, preferably by in-tip mixing) prior to being received by the capillary

Thereby, live-dead differentiation can be conducted by using fluorescent dyes for vitality measurement of the cells.

Also, basic cell analysis can be conducted within this method, which is ideal for simple, routine tests.

In a preferred embodiment of the method the pipette tip is arranged at the first end of the capillary by means of an adapter.

The adapter can be comprised in the capillary, and the capillary can be removable arranged in the receiving section. The receiving section can be equipped to hold a multitude of different types of capillaries, allowing for a quick change between capillary sizes used and therefore a more flexible use of the cytometer.

The receiving section allows for a quick and reliable arrangement of the capillary within the cytometer. The capillary can be arranged removably within the cytometer.

In a preferred embodiment of the method the sample cells are analyzed by the measuring device of the cytometer. Preferably each cell is scanned and even more preferably, at least 5 times. This allows for more precise and reliable measurement and therefore more precise results.

In a preferred embodiment of the method the velocity of the sample passing through the capillary is between 1 µL/min and 500 µL/min. This allows for a more precise measurement, preferably by creating a laminar flow within the capillary.

It is also possible within the invention, to us a fluid flow rate measure and/or control device, preferably an integrated fluid flow rate measure and/or control device.

Such a device comprises at least two detectors which are arranged at a known distance from each other on the capillary.

The following examples depict different ways to derive the fluid flow rate with this arrangement without knowing the inner diameter of the capillary.

Recording the signal pattern at both detectors and correlating these signals; obtaining the speed from the time offset.

Next to using the signals of the passing cells, markers such as fluorescent beads could also be used to determine velocity.

If these beads fluoresce in a different colour/spectrum than the marked cells, they could be measured in, preferably spectrally separate, detectors or detector channels without affecting the measurement of the cells.

Considering that the concentration of the beads is known, this allows to count both, the cells and the beads via different colour/spectrum within the same detector. The known concentration of the beads in addition with the number of counted beads allows to determine the concentration of the cells by comparing the numbers of beads with the numbers of cells.

In a preferred embodiment of the method the measuring device uses Forward and Side laser scatter and/or Fluorescence Analysis to analyze the sample.

The invention also relates to a flow cytometer system. The system comprises the fluid handling device with a mounting element for a pipette tip and a capillary. The pipette can be mounted on the fluid handling device and the capillary can be mounted on the tip, so that the handling device, the tip and the capillary are fuid-connected.

The cytometer system also comprises a flow cytometer associated fluid handling device, wherein the flow cytometer comprises a particle interrogation region for measuring and/or analyzing a fluid within the capillary, with a receiving section for the capillary.

The cytometer system further comprises a measuring device for irradiating and analyzing a sample in the capillary.

The capillary or capillary cuvette (CC) is made up of 2 parts, an upper and a lower part. The upper part is cone-shaped, preferably made via injection molding for holding the tip, preferably a pipette tip.

The lower part is a capillary of 30 to 50mm length, preferably made of glass that can be inserted into and arranged in the cytometer.

In a preferred embodiment of the method the capillary is designed as a glass tube. This allows for a clear path for the light of the cytometer and therefore for improved reading.

The capillary is preferably a single- use component, minimizing the risk of contaminating the sample or the cytometer or the laboratory apparatus. Alongside the easy handling of the capillary, this allows for a high throughput as many samples can be measured consecutively.

Additionally, different capillary diameters can easily be used and thus the measurement can be dynamically adapted to the cell type.

The cytomter system comprises a mounting element and a pipette tip detachably arranged on the mounting element and a displacement element flow-connected to the pipette tip for generating a flow for receiving and / or ejecting the fluid sample, similar to the colibri device taught in US2023/0073005 A1, which is hereby incorporated by reference.

The cytometer comprises a fluorescence sensor, preferably a fluorescence sensor with a microscope objective. This leads to more precise measuring.

However, it is also possible to have a microscope objective without a fluorescence sensor.

In a proposed embodiment, fluorescence cytometry is not based on laser & light scattering, so the centering of the cells is not important and therefore no sheath flow is needed to hydrodynamically focus sample cells into a single-file stream.

Additionally, omitting the lasers reduces sensitivity and therefore less light output is needed.

However, it is possible within an embodiment of the invention to use laser scattering. An advantage of the capillary is that no sheath stream has to be used to hydrodynamically focus sample cells into a single-file stream.

Further advantage of the cytometer is its size. It is SBS-sized and is therefore space efficient. An on-deck integration in a laboratory is also possible, which is advantageous considering the costs of laboratory space.

Additionally, the cytometer is inexpensive because it uses essential components of the liquid handler, does not use laser optics and does not require external robotic arms.

Additionally, different capillary diameters can easily be used and thus the measurement can be dynamically adapted to the cell type.

To achieve a laminar flow, the flow rate must match the capillary and preferably the flow rate is low yet uniform.

Different devices can be used to power the laminar flow, such as syringe pumps for example. It is also possible to use different types of pumps a t the same time and/or for different tasks and flow rates.

For example, a Hamilton liquid handling system can be used.

The sampling rate of cytometers is normally 50kHz to 2MHz.

Preferably, the sensor from has a 10kHz sampling rate.

In a preferred embodiment of the cytometer system, the cytometer comprises 2 excitation channels for emitting light towards the sample in the capillary in the receiving section and 2 detection channels to detect the light reflected from the sample towards the at least one sensor.

The invention further discloses a laboratory apparatus, preferably automated, for processing a fluid sample, comprising a treatment chamber for receiving the fluid sample.

It further comprises a fluid handling device according to the invention, which can be arranged in the treatment chamber to perform at least one processing step on the fluid sample.

Additionally a movement device arranged movably in at least one first spatial direction of the treatment chamber I disclosed, which can be connected to the fluid handling device in such a way that the fluid handling device can be moved through the treatment chamber by means of the movement device. It also comprises a measuring device arranged in the treatment chamber for analyzing the sample; and an electronic control device which is signal-connected to the fluid handling device, the movement device and the measuring device. Thereby, the sample can be moved by the movement device towards the cytometer.

In a preferred embodiment of the laboratory automat for processing a fluid the laboratory automat, comprises a fluid handling device, a pipette tip, a capillary and a cytometer. The fluid handling device is fluid proof connectable to the first end of the capillary by the pipette tip, and the capillary is arrangeable at the cytometer and can be analyzed by the cytometer. Therefore, a sample can be analyzed within the laboratory automat fully automated.

In a preferred embodiment of the laboratory automat the adapter is an integral part of the first end of the capillary and/or wherein the capillary is removable arrangeable in the receiving section

In a preferred embodiment of the laboratory automat the capillary comprises a second end, wherein the end comprises a first adapter region with which the capillary can be fixed in the receiving section, preferably reversibly fixed.

In a preferred embodiment of the laboratory automat the connection between the first end of the capillary and the adapter as well as the connection between the second end of the capillary and the first adapter region can be a bayonet lock, and/or a press fit and/or a tight fit. Such types of connections are advantageous, since they allow for a quick connection and change of the capillary and the adapter.

In a preferred embodiment of the laboratory automat the capillary has a volume between 0.3µl and500µl, preferably between 5µl and 50µl. The capillary has a length between 5 mm and 100 mm, preferably between 15 mm and 35 mm. And/or the capillary and/or the adapter is made of glass and/or produced by injection molding and/or wherein the capillary comprises a measuring window to analyze the sample within the capillary. The measuring window is advantageous, since it allows a easier, more flexible and more precise measures.

The window can be arranged preferably a the first end of the capillary, allowing the light emitted from the cytometer to travel into the capillary and back to the sensor.

In a preferred embodiment of the laboratory automat, the automat comprises at least one reservoir arrangeable adjacent to the second end of the capillary in such a way that the sample from the capillary can be transferred into the reservoir. This prevents the sample from becoming contaminated, since no interference takes place. Moreover, it allows for the cytometer to run without supervision, since no sample needs to be removed during the process from the laboratory automat.

In a preferred embodiment of the laboratory automat the at least one reservoir is a waste reservoir. Thereby waste can be stored within the laboratory automat and does not need to be removed constantly during operation.

In a preferred embodiment of the laboratory automat the at least one reservoir is a cell sorting reservoir and/or storage reservoir. This allows to process the cells directly within the cytometer and therefore provides easier and more convenient handling of the cells and the solution. It is also possible to sort the cells in different reservoirs according to the data obtained during the cell analyzing step.

It is also possible within the invention, to use a fluid flow rate measure and/or control device, preferably an integrated fluid flow rate measure and/or control device.

The following examples depict different ways to derive the fluid flow rate with this arrangement without knowing the inner diameter of the capillary.

Recording the signal pattern at both detectors and correlating these signals; obtaining the speed from the time offset.

Next to using the signals of the passing cells, markers such as fluorescent beads could also be used to determine velocity.

If these beads fluoresce in a different colour/spectrum than the marked cells, they could be measured in, preferably spectrally separate, detectors or detector channels without affecting the measurement of the cells.

Considering that the concentration of the beads is known, this allows to count both, the cells and the beads via different colour/spectrum within the same detector. The known concentration of the beads in addition with the number of counted beads allows to determine the concentration of the cells by comparing the numbers of beads with the numbers of cells.

Further advantageous measures and embodiments of the invention result from the dependent claims.

There are shown in the schematic drawing, partly in section:
- Fig. 1:: a partly schematic sectional representation of an embodiment of a flow cytometer system according to the invention;
- Fig. 2:: a laboratory automat with a flow cytometer system.

The following detailed description illustrates by way of example, not by way of limitation, the principles of the disclosure. This description will clearly enable one skilled in the art to make and use the disclosure, and describes several embodiments, adaptations, variations, alternatives and uses of the disclosure, including what is presently believed to be the best mode of carrying out the disclosure. It should be understood that the drawings are diagrammatic and schematic representations of exemplary embodiments of the disclosure and are not limiting of the present disclosure nor are they necessarily drawn to scale.

The novel features which are characteristic of the disclosure, both as to structure and method of operation thereof, together with further aims and advantages thereof, will be understood from the following description, considered in connection with the accompanying drawings, in which an embodiment of the disclosure is illustrated by way of example. It is to be expressly understood, however, that the drawings are for the purpose of illustration and description only, and they are not intended as a definition of the limits of the disclosure.

In the following description, the various embodiments of the present disclosure will be described with respect to the enclosed drawings. As required, detailed embodiments of the present disclosure are discussed herein; however, it is to be understood that the disclosed embodiments are merely exemplary of the embodiments of the disclosure that may be embodied in various and alternative forms. The figures are not necessarily to scale, and some features may be exaggerated or minimized to show details of particular components. Therefore, specific structural and functional details disclosed herein are not to be interpreted as limiting, but merely as a representative basis for teaching one skilled in the art to variously employ the present disclosure.

The particulars shown herein are by way of example and for purposes of illustrative discussion of the embodiments of the present disclosure only and are presented in the cause of providing what is believed to be the most useful and readily understood description of the principles and conceptual aspects of the present disclosure. In this regard, no attempt is made to show structural details of the present disclosure in more detail than is necessary for the fundamental understanding of the present disclosure, such that the description, taken with the drawings, making apparent to those skilled in the art how the forms of the present disclosure may be embodied in practice.

As used herein, the singular forms "a," "an," and "the" include the plural reference unless the context clearly dictates otherwise. For example, reference to "a capillary material" would also mean that mixtures of one or more capillary materials can be present unless specifically excluded. As used herein, the indefinite article "a" indicates one as well as more than one and does not necessarily limit its referent noun to the singular.

Except where otherwise indicated, all numbers expressing quantities used in the specification and claims are to be understood as being modified in all examples by the term "about." Accordingly, unless indicated to the contrary, the numerical parameters set forth in the specification and claims are approximations that may vary depending upon the desired properties sought to be obtained by embodiments of the present disclosure. At the very least, and not to be considered as an attempt to limit the application of the doctrine of equivalents to the scope of the claims, each numerical parameter should be construed in light of the number of significant digits and ordinary rounding conventions.

Additionally, the recitation of numerical ranges within this specification is considered to be a disclosure of all numerical values and ranges within that range (unless otherwise explicitly indicated). For example, if a range is from about 1 to about 50, it is deemed to include, for example, 1, 7, 34, 46.1, 23.7, or any other value or range within the range.

As used herein, the terms "about" and "approximately" indicate that the amount or value in question may be the specific value designated or some other value in its neighborhood. Generally, the terms "about" and "approximately" denoting a certain value is intended to denote a range within ± 5% of the value. As one example, the phrase "about 100" denotes a range of 100 ± 5, i.e. the range from 95 to 105. Generally, when the terms "about" and "approximately" are used, it can be expected that similar results or effects according to the disclosure can be obtained within a range of ±5% of the indicated value.

As used herein, the term "and/or" indicates that either all or only one of the elements of said group may be present. For example, "A and/or B" shall mean "only A, or only B, or both A and B". In the case of "only A", the term also covers the possibility that B is absent, i.e. "only A, but not B".

The term "at least partially" is intended to denote that the following property is fulfilled to a certain extent or completely.

The terms "substantially" and "essentially" are used to denote that the following feature, property or parameter is either completely (entirely) realized or satisfied or to a major degree that does not adversely affect the intended result.

The term "comprising" as used herein is intended to be non-exclusive and openended. Thus, for example a composition comprising a compound A may include other compounds besides A. However, the term "comprising" also covers the more restrictive meanings of "consisting essentially of" and "consisting of", so that for example "a composition comprising a compound A" may also (essentially) consist of the compound A.

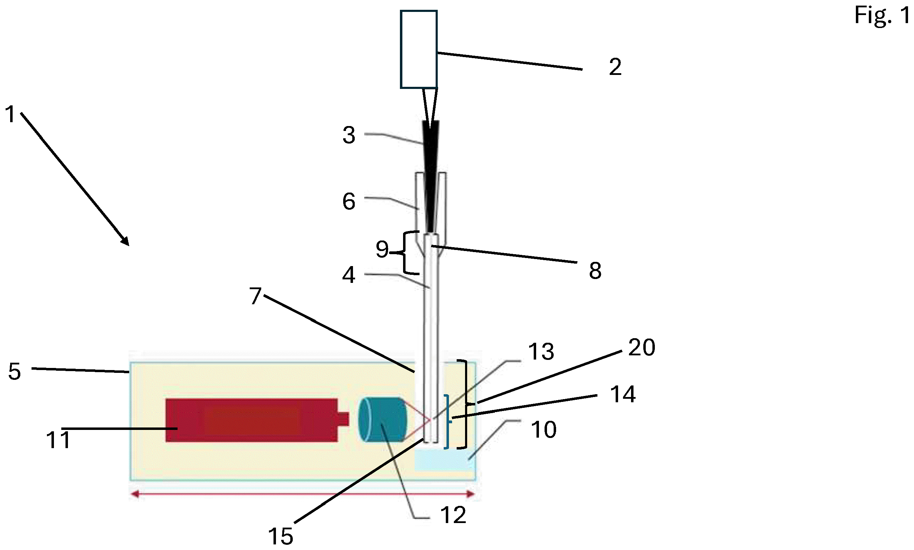

Figure 1 shows a schematic view of a flow cytometer system 1.

It shows the fluid handling device 2, connected to the pipette tip 3 and the pipette tip 3 is arranged at a first adapter region 9 of the first end 8 of the capillary 4 with the adapter 6. The capillary 4 is arranged within receiving section 7 of cytometer 5 at the second end 15 of the capillary 4, with first adapter region 20 of capillary 4.

The cytometer in Figure 1 also shows the measuring device 11 and the microscope object 12 through which radiation (not shown) emitted by the cytometer 5 and detected by the sensor 11 is focused. In a focus point 13, of particle interrogating region 14.

Figure 1 also shows the reservoir 10 of the cytometer 5 for storing and/or sorting of the sample (not shown) after guiding the sample trough the capillary 4 via the fluid handling device 2.

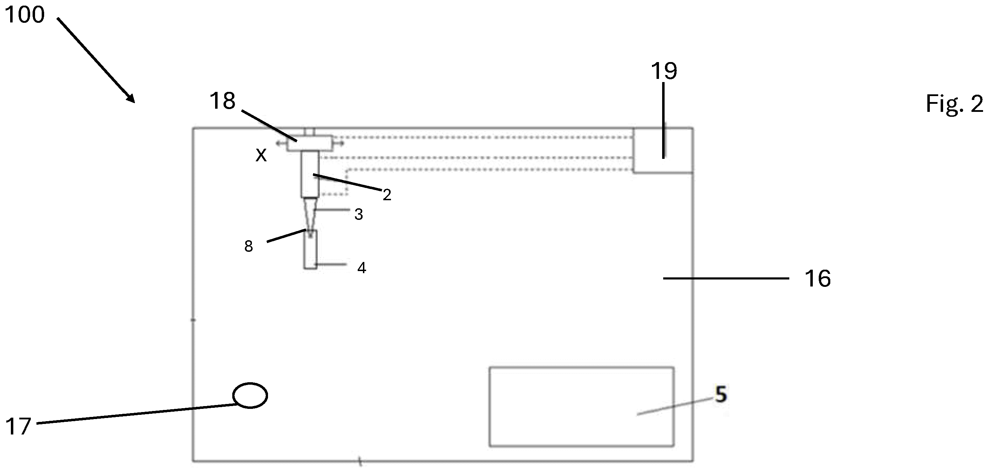

Figure 2 shows a schematic view of a laboratory automat 100 with a flow cytometer system 1 according to the invention.

A laboratory automat 100 for processing a fluid, comprising a fluid handling device 2, a pipette tip 3, a capillary 4 and a cytometer 5, wherein the fluid handling device is fluid proof connected to the first end 8 of the capillary 4 by the pipette tip 3, and the capillary is arrangeable at the cytometer 5 and can be analyzed by the cytometer 5.

A laboratory automat 100 in figure. 2, further shows a treatment chamber 16 for receiving the fluid sample 17.

The laboratory automat 100 further comprises a fluid handling device 2 according to the invention, which can be arranged in the treatment chamber 16 to perform at least one processing step on the fluid sample 17.

Additionally a movement device 18 arranged movably in at least one first spatial direction X of the treatment chamber 16 is disclosed, which is connected to the fluid handling device 2 in such a way that the fluid handling device 2 can be moved through the treatment chamber 16 by means of the movement device 18. It also comprises a measuring device arranged in the treatment chamber for analyzing the sample; and an electronic control device 19 which is signal-connected to the fluid handling device, the movement device and the measuring device. Thereby, the sample 17 can be moved by the movement device 19 towards the cytometer 5.

## Claims

1. A method for using a flow cytometer system (1), comprising the following steps:
- Providing a fluid handling device (2) with a mounting element for a pipette tip (3) and a capillary (4);
- Providing a flow cytometer (5) comprising a particle interrogation region (14) with a receiving section (7) for the capillary,
and a measuring device (11) for irradiating and analyzing a sample (17) in the capillary (4),
- Arranging the fluid handling device (2) fluid connected via the pipette tip (3) at a first end of a capillary (4);
- Directing the sample (17) through the capillary (4), wherein the capillary (4) is arranged at the receiving section (7) of the flow cytometer (5) and wherein the sample (17) is analyzed by the measuring device (11).

2. A method according to claim 1, wherein the pipette tip (3) is arranged at the first end (8) of the capillary (4) by means of an adapter (6) comprised in the capillary (4) and/or wherein the capillary (4) can be removable arranged in the receiving section (7).

3. A method according to claims 1 or 2, wherein the sample (17) comprises cells and wherein the cells are analyzed by the measuring device (11) of the cytometer (5), preferably by scanning each cell, preferably at least 5 times.

4. A method according to one of the preceding claims, wherein the velocity of the sample (17) passing through the capillary (4) is between 1 µL/min and 500 µL/min.

5. A method according to one of the preceding claims, wherein the measuring device (11) uses Forward and Side laser scatter and/or Fluorescence Analysis to analyze the sample (17).

6. A flow cytometer (4) system, the system comprising:
(a) a fluid handling device (2) with a mounting element for a pipette tip (3) and a capillary;
(b) a flow cytometer (5) associated fluid handling device (2), wherein the flow cytometer (5) comprises:
(i) a particle interrogation (14) region with a receiving section (7) for the capillary,
(ii) a measuring device for irradiating and analyzing a sample in the capillary,
wherein the fluid handling device (2) is fluid proof connectable via the pipette tip (3) to the first end of the capillary.

7. A flow cytometer (4) system according to claim 6, wherein the capillary (4) is removably arrangeable in the receiving section (7).

8. A laboratory automat for processing a fluid, comprising a fluid handling device (2), a pipette tip (3), a capillary and a cytometer (5), wherein the fluid handling device (2) is fluid proof connectable to the first end of the capillary by the pipette tip (3), and the capillary is arrangeable at the cytometer (4) and can be analyzed by the cytometer (4).

9. A laboratory automat according to claim 8, wherein the adapter (6) is an integral part of the first end (8) of the capillary (4) and/or wherein the capillary (4) is removable arrangeable in the receiving section (7).

10. A laboratory automat according to claim 8 or 9, wherein the capillary (4) comprises a second end (15), wherein the end comprises a first adapter region (15) with which the capillary (4) can be fixed in the receiving section (7), preferably reversibly fixed.

11. A laboratory automat according to any of the claims 8-10, wherein the connection between the first end (15) of the capillary and the adapter (6) as well as the connection between the second end (15) of the capillary (4) and the first adapter region (20) can be a bayonet lock, and/or a press fit and/or a tight fit.

12. A laboratory automat according to any of the claims 8-11, wherein the capillary (4) has a volume between 0.3µl and500µl, preferably between 5µl and 50µl, a length between 5 mm and 100 mm, preferably between 15 mm and 35 mm and more preferably between 15 and 20 mm and/or wherein the capillary (4) and/or the adapter (6) is made of glass and/or produced by injection molding and/or wherein the capillary (4) comprises a measuring window to analyze the sample within the capillary.

13. A laboratory automat according to any of the claims 8-12, wherein the automat (100) comprises at least one reservoir (10) arrangeable adjacent to the second end (8) of the capillary (4) in such a way that the sample (17) from the capillary (4) can be transferred into the reservoir (10).

14. A laboratory automat according to claim 13, wherein the at least one reservoir (10) is a waste reservoir.

15. A laboratory automat according to claim 14, wherein the at least one reservoir (10) is a cell sorting reservoir (10) and/or storage reservoir (10).
